# EUROPÄISCHE PATENTSCHRIFT

(11) **EP 3 358 250 B1**
(45) Veröffentlichungstag und Bekanntmachung des Hinweises auf die Patenterteilung: **04.10.2023**
(21) Anmeldenummer: 18152729.2
(22) Anmeldetag: 22.01.2018
(51) Int. Cl.: F21V 8/00, G02F 1/1335

(54) **LEUCHTE MIT EINER LICHTLEITPLATTE MIT UMLENKSTRUKTUREN**
LIGHTING APPARATUS WITH A LIGHT GUIDE PLATE HAVING DEFLECTION STRUCTURES
LUMINAIRE POURVU D'UNE PLAQUE DE GUIDAGE DE LUMIÈRE AVEC DES STRUCTURES DE DÉVIATION

(30) Priorität: 01.02.2017 DE 202017100527 U
(43) Veröffentlichungstag der Anmeldung: 08.08.2018
(73) Patentinhaber: Zumtobel Lighting GmbH, 6850 Dornbirn (AT)
(72) Erfinder: Vonach-Lubetz, Katja, 6974 Gaissau (AT); Machate, Andreas, 88239 Wangen im Allgäu (DE)
(74) Vertreter: Kiwit, Benedikt

(56) Entgegenhaltungen:
- EP-A1- 1 640 756
- EP-A2- 2 211 093
- WO-A1-2017/190813
- DE-A1-102008 061 716
- DE-U1-202010 004 343
- US-A1- 2012 127 754
- US-B2- 6 874 900
- US-B2- 7 791 683

## Beschreibung

Die vorliegende Erfindung betrifft eine Leuchte mit einem Lichtleiter.

Aus dem Stand der Technik sind grundsätzlich Leuchten unter Verwendung von Lichtleitplatten bekannt. Bei derartigen Leuchten wird das Licht bevorzugt mittels Leuchtmitteln - wie LEDs - seitlich in die Lichtleitplatte eingeführt. Das Licht pflanzt sich dabei in der Regel mittels Totalreflektion in der Lichtleitplatte fort und verteilt sich dort gleichmäßig und kann dann über entsprechend vorgesehene Auskoppelstrukturen möglichst großflächig über eine flächige Seite der Lichtleitplatte nach außen abgegeben werden. Auf diese Weise können in der Regel flache Leuchten bereitgestellt werden.

EP 2 211 093 A2 zeigt eine Licht emittierende Vorrichtung, die unter anderem eine Vielzahl von Lichtquellen und eine im Wesentlichen orthogonal zur optischen Achsen der Lichtquellen angeordnete Lichtleiterplatte umfasst. Das von einer Lichtquelle emittierte Licht tritt durch eine erste runde Aushöhlung in der Lichteinfallsfläche in die Lichtleiterplatte ein und wird zum Teil mittels Totalreflektion an der Lichtaustrittsfläche der Lichtleiterplatte reflektiert oder tritt durch jene aus der Lichtleiterplatte aus. Der ersten Aushöhlung gegenüberliegend befindet sich eine zweite Aushöhlung in der Lichtaustrittsfläche der Lichtleiterplatte.

US 2012/127754 A1 zeigt unter anderem eine Beleuchtungseinheit umfassend ein transparentes Element, eine Vielzahl von Licht emittierenden Vorrichtungen und eine Vielzahl von Mikro-Strukturen zur Lichtstreuung. Das transparente Element besteht aus einem transparenten Substrat mit einer Lichtaustrittsfläche und einer der Lichtaustrittsfläche gegenüberliegenden Bodenfläche. Ersten Aussparungen in der Lichtaustrittsfläche stehen zweiten Aussparungen in der Bodenfläche gegenüber, wobei die ersten Aussparungen in der Lichtaustrittsfläche über Reflexionsflächen verfügen. Von den Licht emittierenden Vorrichtungen emittiertes Licht tritt durch die jeweiligen kurvenförmigen zweiten Aussparungen in der Bodenfläche in das transparente Element ein, wozu jeder Licht emittierenden Vorrichtungen eine solche zweite Aussparung in der Bodenfläche zugeordnet ist. Die Mikro-Strukturen zur Lichtstreuung sind auf der unteren Oberfläche angeordnet.

US 6 874 900 B2 zeigt eine Liquid Crystal Display (LCD) Vorrichtung, die Lichtquellen, einen Lichtleiter und einen Reflektor, umfasst. Der Lichtleiter weist eine untere Oberfläche, eine obere Oberfläche und Einsenkungen auf. Auf der unteren Oberfläche angeordnete Einsenkungen nehmen die Lichtquellen auf. Den Einsenkungen an der unteren Oberfläche liegen wiederum Einsenkungen auf der oberen Oberfläche gegenüber, zusammen dienen sie dem Übertragen des Lichtes von der Lichtquelle in den Lichtleiter. Ein Teil des Reflektors ist auf der unteren Oberfläche des Lichtleiters angeordnet und deckt die Lichtquelle ab.

US 7 791 683 B2 zeigt ein Beleuchtungssystem bestehend aus einem Wellenleiter mit einer flächigen Oberseite und Unterseite. Das von einer Lichtquelle ausgesandte Licht wird mittels mehrerer Einleitungsmerkmale an der Unterseite in den Wellenleiter eingekoppelt und mittels Totalreflexion in dem Wellenleiter geführt. Der Wellenleiter weist weiterhin auf seiner Unterseite Ausleitungsmerkmale auf, mittels derer ein in dem Wellenleiter geführter Lichtstrahl an der Oberseite aus dem Wellenleiter herausgeleitet wird. Das System weist ferner eine reflektierende Schicht unterhalb der Unterseite sowie weitere optische Elemente oberhalb der Oberseite auf, um die Abstrahlung des Lichts zu verbessern. In einer Weiterbildung des Systems weist der Wellenleiter an seiner Unterseite und an seiner Oberseite Einleitungsmerkmale auf.

Nachveröffentlichtes Dokument WO 2017/190813 A1 offenbart einen dünnen Kunststoff-Lichtleiter mit Hohlräume auf einer Oberfläche sowie mit TIR-Strukturen (Total Internal Reflection) direkt über den Hohlräumen. In den Hohlräumen sind auf einer Leiterplatte montierte LEDs positioniert. Die Hohlraumwände sind so geformt, dass sie das LED-Licht brechen und das LED-Licht auf die TIR-Strukturen richten, um die TIR-Strukturen am effizientesten zu nutzen. Die TIR-Strukturen können eine Scheitel- oder Kegelform haben. Die Hohlräume können so geformt sein, dass sie Licht auf die TIR-Struktur richten, um durch die TIR-Struktur entweichen zu können und das Licht mit Licht zu mischen, das durch umgebende Teile des Lichtleiters entweicht.

EP 1 640 756 A1 offenbart ein System zur Beleuchtung von LCD Bildschirmen. Darin können mehrere Lichtquellen Licht unterschiedlicher Farben ihr Licht über in einer Lichtführung verteilten Ausnehmungen einkoppeln. Durch das zusätzliche Vorsehen eines strukturierten Oberflächenmusters kann eine gute Farbmischung erzielt werden.

Bei der Einkopplung über eine Stirnseite der Lichtleitplatte ist es jedoch nicht möglich, ein vollends rahmenloses Design mit flachen Außenseiten bereitzustellen. Eine Möglichkeit hierzu besteht darin, Leuchten mit verteilt angeordneten Leuchtmitteln (beispielsweise auf einer Leiterplatte verteilt angeordnete LEDs) bereitzustellen, welche auf eine in Abstrahlrichtung davor angeordnete Diffusorplatte oder dergleichen abstrahlen. Diese sogenannte Backlit-Anordnung hat den Nachteil, dass ein definierter Mindestabstand zwischen den Leuchtmitteln und der Diffusorplatte bereitgestellt werden muss, um eine ausreichende Durchmischung des Lichtes zur erzielen. Dies wiederum erfordert einen vergleichsweise großen Raumbedarf, sodass keine flachen Leuchten mit einer solchen Anordnung zu erzielen sind. Des Weiteren ist diese Anordnung von ihrem Wirkungsgrad her geringer als eine Anordnung mittels Lichtleitplatte und seitlicher Lichteinkopplung. Um eine möglichst hohe Durchmischung des Lichtes zu erzielen, könnte beispielsweise der Pitch verringert werden; also der Abstand der einzelnen Leuchtmittel zueinander. Dies bedeutet aber im Umkehrschluss, dass die Anzahl der Leuchtmittel erhöht werden müsste.

Es ist somit eine Aufgabe der vorliegenden Erfindung, eine Optik sowie eine Leuchte mit dieser Optik bereitzustellen, welche bei homogener Lichtabgabe eine flache Leuchtenbauweise auch bei Backlit-Anordnung ermöglicht.

Diese und weitere Vorteile der vorliegenden Erfindung, die im Weiteren noch näher dargestellt werden, werden durch den Gegenstand des unabhängigen Anspruchs gelöst. Die abhängigen Ansprüche bilden den zentralen Gedanken der Erfindung in besonders vorteilhafter Weise weiter.

Gemäß einem ersten Aspekt betrifft die vorliegende Erfindung einen Lichtleiter mit zwei miteinander über eine umlaufende Stirnseite verbundenen flächigen Seiten. Wenigstens eine der flächigen Seiten, bevorzugt aber auch beide flächigen Seiten, weist/weisen eine Vielzahl von Vertiefungen auf, welche sich in Richtung zu der jeweils anderen flächigen Seite hin erstrecken. Unter "Vertiefung" wird im Rahmen der Erfindung eine Sackloch-artige Ausnehmung über eine beliebige Höhe des Lichtleiters, jedoch kein Durchgangsloch verstanden. Es handelt sich also um eine nicht-durchgehende - also nicht die Dicke des Lichtleiters durchgreifende bzw. eine die beiden flächigen Seiten nicht verbindende - Ausnehmung im Lichtleiter. "In Richtung zu der jeweils anderen flächigen Seite hin" bezeichnet daher im Rahmen der Erfindung lediglich die Erstreckungsrichtung, wobei sich die Vertiefung nicht gänzlich bis zu der jeweils anderen flächigen Seite durch den Lichtleiter hindurch erstreckt; mithin also kein (Durchgangs-)Loch im Lichtleiter bildet, sondern allenfalls Sackloch-artig ausgebildet ist. Jede Vertiefung in seitlicher Querschnittsansicht des Lichtleiters gesehen weist zwei wenigstens teilweise quer zu dem die Vertiefung aufweisenden Bereich der flächigen Seite und aufeinander zu verlaufende Flanken auf, um über eine der flächigen Seiten in den Lichtleiter eingestrahltes Licht seitlich in Richtung der Erstreckungsrichtung des Lichtleiters oder des die Vertiefung umgebenden Lichtleiterteilbereichs umzulenken, um so wiederum das umgelenkte Licht flächig in dem Lichtleiter oder im Lichtleiterteilbereich mittels Totalreflektion zu verteilen. Die Vertiefungen weisen also eine Art Linsenform auf, um als Umlenkstrukturen das Licht quer in den Lichtleiter einzukoppeln bzw. zu verteilen.

Mittels der vorbezeichneten Anordnung wird es ermöglicht, über eine große Fläche verteilt und rückseitig eines Lichtleiters abgestrahltes Licht (Backlit) orthogonal zur Einstrahlrichtung in den Lichtleiter derart umzulenken, dass sich das Licht in dem Lichtleiter ausbreiten und somit großflächig über den Lichtleiter verteilen und aus diesem abgegeben werden kann. Somit wird eine gute Durchmischung des Lichtes erzielt, während gleichzeitig eine geringe Bauhöhe einer mit diesem Lichtleiter ausgestatteten Leuchte, wie sie im Weiteren noch beschrieben wird, erzielt werden kann.

Die Vertiefungen sind dabei in bevorzugter Weise topfförmig, kegelförmig oder trichterförmig (insgesamt also Sackloch-artig) ausgebildet. Insbesondere weisen diese bevorzugt eine rotationssymmetrische Form mit Rotationssymmetrieachse auf, wobei die Flanken wenigstens teilweise quer zu der Rotationssymmetrieachse verlaufen. Auf diese Weise können definierte Einkoppel- bzw. Umlenkstrukturen bereitgestellt werden.

Wie bereits zuvor beschrieben, können auch beide flächigen Seiten des Lichtleiters eine Vielzahl von Vertiefungen aufweisen. In diesem Fall liegt in einem bevorzugten Ausführungsbeispiel jede Vertiefung wenigstens eines Teils der Vertiefungen der ersten flächigen Seite jeweils einer der Vertiefung der zweiten flächigen Seite gegenüber. Es ist auch denkbar, dass alle Vertiefungen einer der flächigen Seite einer Vertiefung der anderen flächigen Seite als "optischer Partner" gegenüberliegt. Diese Vertiefungen erstrecken sich also aufeinander zu, wobei sie nicht miteinander verbunden sind; mithin also kein (Durchgangs-)Loch im Lichtleiter bilden. Dies gilt im Übrigen für alle Vertiefungen alleine oder im Zusammenspiel mit Vertiefungen auf einander gegenüberliegenden flächigen Seiten, dass sie kein (Durchgangs-)Loch im Lichtleiter bilden. Die vorbezeichneten Paare von Vertiefungen können jeweils bevorzugt dieselbe Rotationssymmetrieachse aufweisen, sofern sie rotationssymmetrisch ausgebildet sind. Mittels dieser Doppelstrukturen kann eine besonders effektive Lichtumlenkung von in den Lichtleiter eingestrahlten Lichts erzielt werden.

Neben den vorbezeichneten Umlenkstrukturen kann der Lichtleiter ferner Lichtauskoppelstrukturen zum bevorzugt großflächigen Auskoppeln des in den Lichtleiter oder im Lichtleiterteilbereich verteilten Lichts über eine der flächigen Seiten des Lichtleiters aufweisen. Dabei handelt es sich bevorzugt um die der Lichteinstrahlung gegenüberliegende flächige Seite des Lichtleiters. Die Lichtauskoppelstrukturen sind dabei bevorzugt an oder in einer der flächigen Seiten ausgebildet, welche ferner bevorzugt der der Auskopplung dienenden flächigen Seite gegenüberliegt. Mittels derart vorgesehenen Auskoppelstrukturen können integrale Auskoppelstrukturen mit dem Lichtleiter bereitgestellt werden, um somit das homogen verteilte Licht gleichmäßig und bevorzugt über die gesamte Fläche des Lichtleiters auszukoppeln.

Alternativ oder zusätzlich kann der Lichtleiter ferner Lichtauskoppelbereiche zum bevorzugt großflächigen Auskoppeln des in der Lichtleitplatte oder im Lichtleiterteilbereich verteilten Lichts über eine der flächigen Seiten des Lichtleiters aufweisen. Diese Lichtauskoppelbereiche sind dabei vorzugsweise durch Dichteunterschiede im Lichtleitermaterial gebildet. Auf diese Weise kann einfach eine integrale Bereitstellung von Lichtauskoppelbereichen mit dem Lichtleiter bereitgestellt werden.

Wenigstens von einem Teil der Vertiefungen auf einer der flächigen Seiten ist die die Vertiefung begrenzende Oberfläche wenigstens teilweise reflektierend ausgebildet. Diese kann beispielsweise wenigstens teilweise mit einer reflektierenden Schicht versehen sein. Insbesondere kann sie hierzu wenigstens teilweise Aluminium bedampft sein. Auch andere Beschichtungsverfahren und Materialien sowie separat vorgesehene bzw. eingesetzte Reflektorelemente sind denkbar. Derart ausgebildete Vertiefungen öffnen sich bevorzugt zu der flächigen Seite hin, welche der der Lichteinstrahlung dienenden flächigen Seite gegenüberliegt. Diese sind dann quasi als Reflektor in dem Lichtleiter ausgebildet, um von der gegenüberliegenden flächigen Seite eingestrahltes Licht bevorzugt quer bzw. orthogonal bzgl. der Lichteinkoppelrichtung und insbesondere in Richtung der Erstreckungsebene des Lichtleiters bzw. des Lichtleiterteilbereichs das Licht umzulenken.

Eine der flächigen Seiten des Lichtleiters kann wenigstens zu der anderen flächigen Seite hin gerichtet reflektierend ausgebildet sein. Diese kann dazu bevorzugt mit einer reflektierenden Beschichtung versehen sein, wobei den Leuchtmitteln zugeordnete Bereiche freigelassen sind, um eine Lichteinstrahlung in den Lichtleiter zu ermöglichen. Auf diese Weise können ungewollt austretende Lichtanteile über die vorbezeichnete flächige Seite vermieden werden. Indem sie durch Reflektion wieder in den Lichtleiter zurückgeführt werden, kann der Wirkungsgrad einer mit dem Lichtleiter ausgestatteten Leuchte weiter erhöht werden.

Der Lichtleiter kann als Lichtleitplatte mit flächiger Erstreckung im Wesentlichen in einer Ebene ausgebildet sein. Es ist alternativ jedoch auch denkbar, dass der Lichtleiter eine räumliche Form aufweist. Somit wird die Gestaltungsfreiheit des Lichtleiters sowie damit auszustattender Leuchten erhöht. Bei der räumlichen Form können bevorzugt die die jeweilige Vertiefung umgebenden Lichtleiterteilbereiche rotationssymmetrisch ausgebildet sein, vorzugsweise eine Trichterform aufweisen.

Die vorliegende Erfindung betrifft ferner eine Leuchte mit dem vorbezeichneten erfindungsgemäßen Lichtleiter sowie eine Vielzahl von Leuchtmitteln. Jedem Leuchtmittel ist dabei eine Vertiefung zum Umlenken von über eine der flächigen Seiten eingestrahlten Licht des zugeordneten Leuchtmittels zugeordnet. Die Leuchtmittel könnend dabei auf einer Leiterplatte angeordnete LEDs aufweisen. Somit können kleine Leuchtmittel (quasi Punktlichtquellen) bereitgestellt werden, was wiederum vorteilhaft für eine geringe Bauhöhe einer entsprechend ausgebildeten Leuchte ist.

Die Leiterplatte ist bevorzugt auf der dem Lichtleiter zugewandten Seite reflektierend ausgebildet. Dabei kann die Leiterplatte bevorzugt mit reflektierender Beschichtung oder durch Abdeckung mit einer Reflektor- oder Diffusorfolie ausgestattet sein. Die Reflektor- oder Diffusorfolie weist ferner bevorzugt Öffnungen auf, in denen die Leuchtmittel angeordnet oder durch welche die Leuchtmittel hindurch auf den Lichtleiter abstrahlen können. Durch Bereitstellen einer entsprechend reflektierenden Leiterplatte oder wahlweise eines entsprechend reflektierend ausgebildeten Lichtleiters wird der Wirkungsgrad der erfindungsgemäßen Leuchte weiter erhöht, da eventuell aus der Rückseite austretendes Licht in den Lichtleiter zurück umgelenkt werden kann.

Die Leuchtmittel bzw. die Leiterplatte kann bevorzugt auf einer der beiden flächigen Seiten des Lichtleiters angeordnet sein. Die vorbezeichneten Vertiefungen sind dann auf der gegenüberliegenden flächigen Seite, und optional auch auf derselben flächigen Seite, vorgesehen. So ist es je nach gewünschter Lichteinkopplung und Lichtauskopplung möglich, die Struktur des Lichtleiters sowie dessen Vertiefungen entsprechend anzupassen.

Wie zuvor bereits beschrieben, sind die auf der den Leuchtmitteln gegenüberliegenden flächigen Seite vorgesehenen Vertiefungen diejenigen, die wenigstens teilweise reflektierend ausgebildete Oberfläche aufweisen.

Die Leuchte weist ferner auf der den Leuchtmitteln abgewandten flächigen Seite ein flächiges Optikelement auf, welches an dem Lichtleiter anliegend vorgesehen ist. Auf diese Weise kann eine zusätzliche Homogenisierung des von dem Lichtleiter abgegebenen Lichtes erfolgen, sodass eine besonders homogen leuchtende Fläche der Leuchte resultiert.

Bei dem flächigen Optikelement kann es sich bevorzugt um eine Diffusorfolie oder eine Diffusorplatte handeln. Vorzugsweise kann das Optikelement ferner mit zunehmendem Abstand zu dem Lichtleiter eine mikroprismatische Optik in Form einer Folie oder Platte sowie wahlweise ferne eine transparente Abdeckung aufweisen.

In einer bevorzugten Ausgestaltungsform ist das diffus wirkende Optikelement bzw. die Diffusorfolie bzw. -platte derart ausgebildet, dass sie nach dem Prinzip der Rückreflektion funktioniert. Diese wird so stark gewählt, dass die Positionen der Auskoppelstrukturen sowie Umlenkstrukturen aufgelöst sind. Aus diesem Grund ist es auch vorteilhaft, die Rückseite - also die der Auskopplung gegenüberliegende flächige Seite - des Lichtleiters bzw. die dem Lichtleiter zugewandte Seite der Leiterplatte reflektierend zu gestalten; dies beispielsweise durch die vorbezeichnete Beschichtung oder Abdeckung der Leiterplatte oder wahlweise durch eine entsprechende Beschichtung der entsprechenden flächigen Seite des Lichtleiters.

Ein Vorteil der vorliegenden Erfindung ist es, dass das vorbeschriebene Optikelement gerade nicht von dem Lichtleiter beabstandet vorgesehen werden muss, sondern auch direkt an dem Lichtleiter anliegend bereitgestellt sein kann, da durch die homogene Lichtverteilung mittels des erfindungsgemäßen Lichtleiters bevorzugt keine Luft mehr als Mischstrecke zur Lichtverteilung notwendig ist. Folglich kann insgesamt die Höhe der Leuchte besonders gering gehalten werden.

Die Leuchte kann ferner ein Gehäuse aufweisen, mit welchem der Lichtleiter, die Leuchtmittel (ggf. samt Leiterplatte) und wahlweise das Optikelement in einem vordefinierten Abstand zueinander angeordnet sind. In einer besonders bevorzugten Ausgestaltungsform sind Lichtleiter, Leuchtmittel (beispielsweise auf Leiterplatte vorgesehene LEDs) und Optikelement aneinander anliegend ausgebildet.

Weitere Vorteile und Ausgestaltungen der vorliegenden Erfindung werden anhand der Figuren der begleitenden Zeichnungen im Folgenden beispielhaft beschrieben. Es zeigen:
- Figur 1: eine seitliche Querschnittsansicht eines Teilausschnitts einer erfindungsgemäßen Leuchte mit einem Lichtleiter gemäß der vorliegenden Erfindung,
- Figur 2: mehrere Ausführungsbeispiele eines erfindungsgemäßen Lichtleiters in Form einer Lichtleiplatte mit unterschiedlichen Anordnungsvarianten der Vertiefungen, und
- Figur 3: eine weitere Ausführungsform eines erfindungsgemäßen Lichtleiters mit räumlicher (dreidimensionaler) Form.

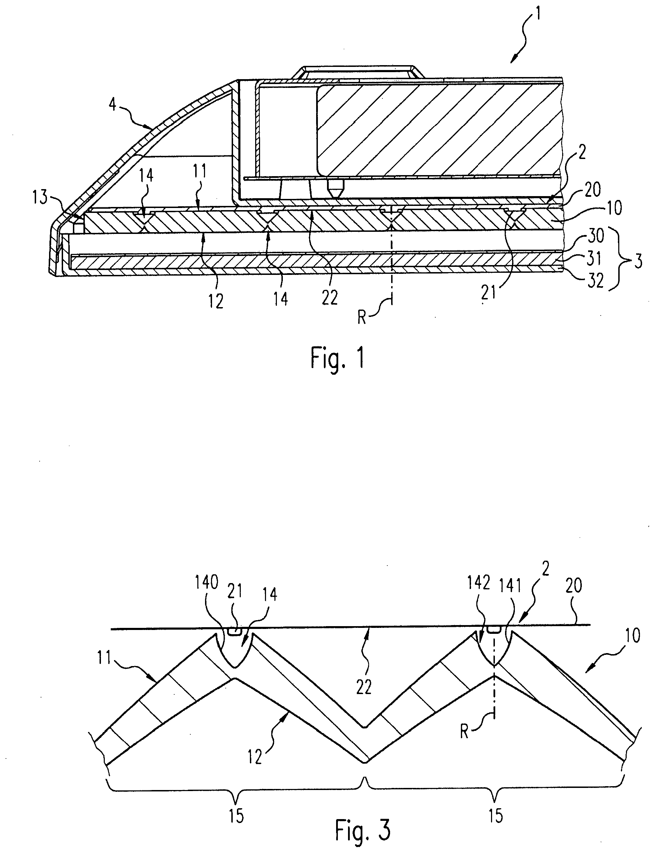

Die Figur 1 zeigt eine Ausführungsform einer erfindungsgemäßen Leuchte 1. Die dargestellte Leuchte 1 weist dabei einen erfindungsgemäßen Lichtleiter 2 auf, welcher auch einen eigenständigen Bestandteil der vorliegenden Erfindung bildet.

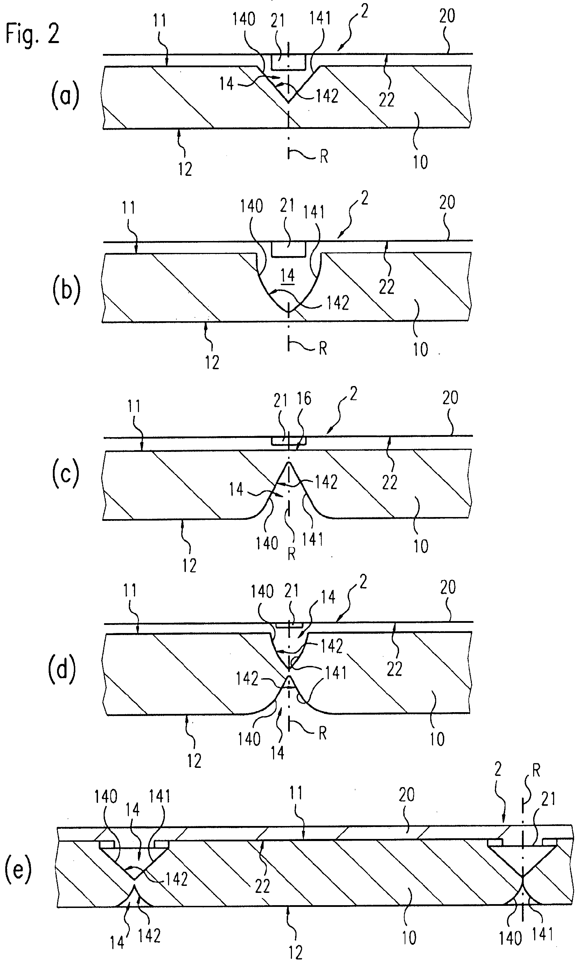

Die Figuren 2(c), 2(d) und 2(e) sind Ausführungsformen der beanspruchten Erfindung. Die in den Figuren 2(a), 2(b) und 3 dargestellten Alternativen fallen nicht unter den Umfang der beigefügten Ansprüche.

Wenigstens eine der flächigen Seiten 11, 12 (vgl. Figuren 2a bis 2c und Figur 3) oder beide flächigen Seiten 11, 12 (vgl. Figur 1, Figuren 2d und 2e) weisen eine Vielzahl von Vertiefungen 14 auf. Wie in den Figuren zu erkennen ist, erstrecken sich die jeweiligen Vertiefungen 14 in Richtung zu der jeweils anderen flächigen Seite 12, 11 hin. Sie sind also jeweils als Sackloch-artige Ausnehmung ausgebildet, welche kein (Durchgangs-)Loch in dem Lichtleiter 2, sondern vielmehr eine im Weiteren beschrieben Linsenform bzw. Umlenkstruktur bilden. Die Vertiefungen 14 erstrecken sich also nicht durchgreifend als Verbindung zwischen den flächigen Seiten 11, 12. Jede Vertiefung 14 weist in seitlicher Querschnittsansicht des Lichtleiters 2 gesehen (vgl. Figuren 1 bis 3) zwei wenigstens teilweise quer zu dem die Vertiefung 14 aufweisenden Bereich der flächigen Seite 11, 12 und aufeinander zu verlaufende Flanken 140, 141 auf, um über eine der flächigen Seiten - in den dargestellten Ausführungsbeispiel die flächige Seite 11 - eingestrahltes Licht seitlich in Richtung der Erstreckungsrichtung des Lichtleiters 10 oder des die Vertiefung 14 umgebenden Lichtleiterteilbereichs 15 (vgl. insbesondere Figur 3) umzulenken, um eben das so umgelenkte Licht flächig in dem Lichtleiter 10 oder im Lichtleiterteilbereich 15 mittels Totalreflexion zu verteilen. Zur Lichteinkopplung weist die erfindungsgemäße Leuchte 1 hierzu eine Vielzahl von Leuchtmitteln 2 auf, wobei jedem Leuchtmittel 2 eine Vertiefung 14 zum Umlenken von über eine der flächigen Seiten - hier die flächige Seite 11 - eingestrahltem Licht des zugeordneten Leuchtmittels 2 zugeordnet ist. Wie in den Figuren dargestellt, weisen die Leuchtmittel 2 dabei bevorzugt auf einer Leiterplatte 20 angeordnete LEDs 21 auf.

Die Leuchtmittel 2 bzw. die Leiterplatte 20 ist bevorzugt auf einer der flächigen Seiten - hier der flächigen Seite 11 - angeordnet. Die Vertiefungen 14 sind dann auf derselben (vgl. Figuren 2a und 2b sowie Figur 3), auf der gegenüberliegenden (vgl. Figur 2c) oder auf beiden flächigen Seiten 11, 12 (vgl. Figur 1 sowie Figuren 2d und 2e) vorgesehen.

Insbesondere mittels der auf derselben Seite der Leuchtmittel 2 vorgesehenen Vertiefungen 14 kann das Leuchtmittel 2 bevorzugt in dieser Vertiefung 14 angeordnet sein und direkt in diese einstrahlen. Das Licht wird dann über die hier dargestellten Flanken 140, 141 entsprechend seitlich in den Lichtleiter bzw. die Lichtleitplatte 10 umgelenkt und somit in diese eingekoppelt um sich dort mittels Totalreflexion in dem Lichtleiter 10 fortzupflanzen.

Bei der Ausgestaltung mit Vertiefungen 14 auf der dem Leuchtmittel 2 bzw. der Leiterplatte 20 gegenüberliegenden flächigen Seite - hier die flächige Seite 12 - wird das bereits in den Lichtleiter 10 einkoppelte Licht insbesondere an den den Leuchtmitteln 2 gegenüberliegenden Bereichen des Lichtleiters 10 durch die entsprechende Kontur der Vertiefung 14 quer bzw. seitlich in den Lichtleiter 10 auf vorbeschriebene Weise umgelenkt und kann sich dort mittels Totalreflexion in dem Lichtleiter 10 fortpflanzen, um somit großflächig zur Lichtauskopplung bereitzustehen.

Wie den Figuren zu entnehmen ist, können die Vertiefungen 14 unterschiedlich ausgebildet sein. Besonders bevorzugt sind hierbei eine Topfform, eine Kegelform oder auch eine Trichterform. Auch andere Ausgestaltungen sind denkbar. Wie den Figuren ferner zu entnehmen ist, weisen die Vertiefungen 14 bevorzugt eine rotationssymmetrische Form mit Rotationssymmetrieachse R auf, wobei die Flanken 140, 141 wenigstens teilweise quer zu der Rotationssymmetrieachse R verlaufen. Somit kann eine gleichmäßige Einkopplung in den Lichtleiter 10 erzielt werden.

Bei der Ausgestaltung mit Vertiefungen 14 auf beiden flächigen Seiten 11, 12, wie beispielsweise in den Figuren 1, 2d und 2e gezeigt, können die Vertiefungen 14 derart bereitgestellt sein, dass jeder Vertiefung 14 wenigstens eines Teils der Vertiefungen 14 der ersten flächigen Seite 11 jeweils einer der Vertiefungen 14 der zweiten flächigen Seite 12 gegenüberliegt, wobei diese Paare von Vertiefungen 14 - wie in den vorbezeichneten Figuren dargestellt - jeweils bevorzugt dieselbe Rotationssymmetrieachse R aufweisen. Diese bilden somit eine mit ihren Spitzen zueinander gerichtete Doppelform, wodurch eine weiter effektive Umlenkung des über die Leuchtmittel 2 in den Lichtleiter 10 eingestrahlten Lichtes erzielt werden kann. Da die Vertiefungen 14 sich erfindungsgemäß nicht-durchgehend durch die Leiterplatte 2 erstrecken, sind auch einander gegenüberliegende Vertiefungen 14 nicht miteinander verbunden und bilden mithin kein (Durchgangs-)Loch im Lichtleiter 2. So kann deren Linsenform sicher erzielt und die Leiterplatte 2 direkt durchstrahlende Lichtanteile vermieden werden, was insgesamt zu einer homogenen Lichtverteilung und Lichtabgabe führt.

Der Lichtleiter 10 weist ferner hier nicht dargestellte Lichtauskoppelstrukturen zum bevorzugt großflächigen Auskoppeln des in dem Lichtleiter 10 oder dem Lichtleiterteilbereich 15 verteilten Lichts über eine der flächigen Seiten - hier die flächige Seite 12 - des Lichtleiters 10. Dabei sind die Lichtauskoppelstrukturen bevorzugt an oder in einer der flächigen Seiten - hier bevorzugt der flächigen Seite 11 - ausgebildet, welche bevorzugt der der Auskopplung dienenden flächigen Seite - hier die flächige Seite 12 - gegenüberliegt.

Alternativ oder zusätzlich zu den Lichtauskoppelstrukturen können ferner Lichtauskoppelbereiche zum vergleichbaren Auskoppeln des Lichts aus dem Lichtleiter 10 bereitgestellt sein. Diese Lichtauskoppelbereiche sind dabei bevorzugt durch Dichteunterschiede im Lichtleitermaterial gebildet. Auf diese Weise kann eine einfache integrale Bereitstellung von Lichtauskoppelbereichen erzielt werden.

Wenigstens von einem Teil der Vertiefungen 14 auf einer der flächigen Seiten - hier der flächigen Seite 12 - kann die die Vertiefung 14 begrenzende Oberfläche 142 (also die die Flanken 140, 141 bildende Oberfläche) wenigstens teilweise reflektierend ausgebildet sein. Diese kann beispielsweise wenigstens teilweise mit einer reflektierenden Schicht versehen sein. Beispielsweise kann die Oberfläche dazu wenigstens teilweise Aluminium-bedampft sein. Auf diese Weise kann das von der gegenüberliegenden flächigen Seite - hier die flächige Seite 11 - bezüglich der reflektierend ausgebildeten Vertiefung 14 eingestrahlte und in den Lichtleiter 10 eingekoppelte Licht auf sichere Weise seitlich umgelenkt werden. In Kombination mit einander gegenüberliegenden Vertiefungen 14, wie in den Figuren 1, 2d und 2e gezeigt, kann somit eine insgesamt besonders effektive Lichtumlenkung und somit homogene Lichtverteilung erzielt werden. Dabei ist, wie zuvor beschrieben, insbesondere die auf der den Leuchtmitteln 2 gegenüberliegenden flächigen Seite - hier der flächigen Seite 12 - vorgesehenen Vertiefungen 14 die wenigstens teilweise reflektierend ausgebildet Oberfläche 142 vorgesehen. Die anderen Vertiefungen 14 - also die den Leuchtmitteln 2 zugewandten bzw. zugeordneten Vertiefungen 14 - weisen dann keine solche reflektierende Oberfläche auf und sind vielmehr als entsprechende Linse bzw. Umlenkstruktur ausgebildet.

Eine der flächigen Seiten - hier insbesondere die flächige Seite 11 - kann wenigstens zu der anderen flächigen Seite 12 hin reflektierend ausgebildet sein. Dies bevorzugt mit einer reflektierenden Beschichtung. Dabei sind den Leuchtmitteln 2 zur Lichteinstrahlung in den Lichtleiter 10 zugeordnete Bereiche 16 - sofern nicht ohnehin in diesen Bereichen eine Vertiefung 14 vorgesehen ist - von der entsprechenden Beschichtung freigelassen. In Ergänzung oder alternativ hierzu kann auch die Leiterplatte 20 auf der dem Lichtleiter 10 zugewandten Seite 22 entsprechend reflektierend ausgebildet sein. Dies vorzugsweise mittels reflektierender Beschichtung oder durch Abdeckung mit einer Reflektor- oder die Diffusorfolie. Die Reflektor- oder Diffusorfolie weist hierzu bevorzugt Öffnungen auf, in denen die Leuchtmittel 2 angeordnet oder durch welche die Leuchtmittel 2 hindurch auf den Lichtleiter 10 abstrahlen können.

Indem folglich ein reflektierender Bereich auf Seiten der der Lichtauskopplung gegenüberliegenden Seite des Lichtleiters 10 vorgesehen ist, wird es ermöglicht, eventuell rückseitig austretendes Licht zurück in den Lichtleiter 10 zu werfen, um ihn zur Lichtabgabe bereitzustellen. Auf diese Weise wird der Wirkungsgrad der erfindungsgemäßen Leuchte 1 bzw. des erfindungsgemäßen Lichtleiters 10 weiter erhöht.

Wie insbesondere der Figur 1 zu entnehmen ist, kann die Leuchte auf der den Leuchtmitteln 2 abgewandten flächigen Seite - hier die flächige Seite 12 - ein flächiges Optikelement 3 aufweisen. Dieses Optikelement 3 kann bevorzugt an dem Lichtleiter 10 anliegend oder auch von dem Lichtleiter beabstandet vorgesehen sein.

Das flächige Optikelement 3 kann beispielsweise eine Diffusorfolie oder Diffusorplatte aufweisen. Vorzugsweise kann das Optikelement 3 ferner mit zunehmenden Abstand zu dem Lichtleiter 10 eine mikroprismatische Optik 31 in Form einer Folie oder - wie hier dargestellt - Platte sowohl wahlweise ferner eine transparente Abdeckung 32 aufweisen. Mittels dieses dem Lichtleiter 10 in Lichtabstrahlrichtung nachgeschalteten Optikelements 3 kann eine weitere Lichtbeeinflussung und insbesondere eine weitere Homogenisierung des Lichtes erfolgen, so dass eine insgesamt besonders homogene Lichtabgabe der Leuchte 1 erzielt werden kann.

Wie insbesondere der Figur 1 zu entnehmen ist, kann die Leuchte 1 ferner ein Gehäuse 4 aufweisen, mit welchem der Lichtleiter 10, die Leuchtmittel 2 und wahlweise das Optikelement 3 in einem vordefinierten Abstand zueinander angeordnet sind.

Bei der Leuchte 1 handelt es sich um eine Einbauleuchte, eine Anbauleuchte oder eine Pendelleuchte.

Der Lichtleiter 10 kann, mit Verweis auf die Figuren 1 und 2, als Lichtleitplatte mit flächiger Erstreckung im Wesentlichen in einer Ebene ausgebildet sein. Alternativ ist es jedoch auch denkbar, dass der Lichtleiter 10, wie in Figur 3 dargestellt, eine räumliche Form aufweist; mithin also eine dreidimensionale Form. Bei der räumlichen Form können bevorzugt die die jeweilige Vertiefung 14 umgebenden Lichtleiterteilbereiche 15 rotationssymmetrisch ausgebildet sein. In Figur 3 sind die Lichtleiterteilbereiche 15 dabei bevorzugt in einer Trichterform ausgebildet. Hier in einer Trichterform, welche sich von dem Leuchtmittel 2 weg erstreckend aufweitet. Jedoch sind grundsätzlich auch andere räumliche Formen des Lichtleiters 10 denkbar, sofern es mittels der Vertiefungen 14 erreicht werden kann, dass das in den Lichtleiter 10 eingestrahlte bzw. einkoppelte Licht sich bevorzugt mittels Totalreflexion in den Lichtleiter 10 bzw. den zugeordneten Lichtleiterteilbereich 15 entsprechend ausbreiten kann, um für eine homogene und möglichst großflächige Lichtabgabe bereitzustehen. Die vorliegende Erfindung ist auf die zuvor beschriebenen Ausführungsbeispiele nicht beschränkt, sofern sie vom Gegenstand der folgenden Ansprüche umfasst ist. Insbesondere sind Form des Lichtleiters 10, Anzahl und Form der Vertiefungen 14 sowie die Ausgestaltung des Optikelements durch die Erfindung nicht beschränkt.

Auch kann die vorliegende Leuchte mit Gehäuse G oder auch rahmenlos bereitgestellt sein.

## Patentansprüche

1. Leuchte (1) aufweisend
einen Lichtleiter (10), aufweisend zwei miteinander über eine umlaufende Stirnseite (13) verbundene flächige Seiten (11, 12), wobei wenigstens eine der flächigen Seiten (11, 12) eine Vielzahl von Vertiefungen (14) aufweist, welche sich in Richtung zu der anderen flächigen Seite (12, 11) hin erstrecken, wobei jede Vertiefung (14) in seitlicher Querschnittsansicht des Lichtleiters (10) gesehen zwei wenigstens teilweise quer zu dem die Vertiefung (14) aufweisenden Bereich der flächigen Seite (11, 12) und aufeinander zu verlaufende Flanken (140, 141) aufweist, um über eine der flächigen Seiten (11, 12) eingestrahltes Licht seitlich in Richtung der Erstreckungsrichtung des Lichtleiters (10) oder des die Vertiefung (14) umgebenden Lichtleiterteilbereichs (15) umzulenken, um das umgelenkte Licht flächig in dem Lichtleiter (10) oder im Lichtleiterteilbereich (15) mittels Totalreflexion zu verteilen;
sowie eine Vielzahl von Leuchtmittel (2), wobei jedem Leuchtmittel (2) eine Vertiefung (14) zum Umlenken von über eine der flächigen Seiten (11, 12) eingestrahltem Licht des zugeordneten Leuchtmittels (2) zugeordnet ist, wobei die Leuchtmittel (2) auf einer der flächigen Seiten (11, 12) angeordnet und die Vertiefungen (14) auf wenigstens der gegenüberliegenden flächigen Seite (12, 11) vorgesehen sind,
**dadurch gekennzeichnet, dass**
wenigstens die auf der den Leuchtmitteln (2) gegenüberliegenden flächigen Seite (12) vorgesehenen Vertiefungen (14) eine die Vertiefung (14) begrenzende Oberfläche (142) aufweisen, die reflektierend ausgebildet ist, und die Leuchte (1) eine Einbauleuchte, eine Anbauleuchte oder eine Pendelleuchte ist.

2. Leuchte (1) nach Anspruch 1, wobei die Vertiefungen (14) topfförmig, kegelförmig oder trichterförmig ausgebildet sind.

3. Leuchte (1) nach Anspruch 1 oder 2, wobei die Vertiefungen (14) eine rotationssymmetrische Form mit Rotationssymmetrieachse (R) aufweisen, wobei die Flanken (140, 141) wenigstens teilweise quer zu der Rotationssymmetrieachse (R) verlaufen.

4. Leuchte (1) nach einem der vorhergehenden Ansprüche, wobei beide flächige Seiten (11, 12) eine Vielzahl von Vertiefungen (14) aufweisen.

5. Leuchte (1) nach Anspruch 4, wobei jede Vertiefung (14) wenigstens eines Teils der Vertiefungen (14) der ersten flächigen Seite (11, 12) jeweils einer der Vertiefungen (14) der zweiten flächigen Seite (12, 11) gegenüberliegt, wobei bevorzugt diese Paare von Vertiefungen (14) jeweils dieselbe Rotationssymmetrieachse (R) aufweisen.

6. Leuchte (1) nach einem der vorhergehenden Ansprüche, wobei der Lichtleiter (10) ferner Lichtauskoppelstrukturen zum Auskoppeln des in dem Lichtleiter (10) oder dem Lichtleiterteilbereich (15) verteilten Lichts über eine der flächigen Seiten (11, 12) des Lichtleiters (10) aufweist.

7. Leuchte (1) nach Anspruch 6, wobei die Lichtauskoppelstrukturen an oder in einer der flächigen Seiten (11, 12) ausgebildet sind, welche bevorzugt der der Auskopplung dienenden flächigen Seite (12, 11) gegenüberliegt.

8. Leuchte (1) nach einem der vorhergehenden Ansprüche, wobei der Lichtleiter (10) ferner Lichtauskoppelbereiche zum Auskoppeln des in dem Lichtleiter (10) oder in dem Lichtleiterteilbereich (15) verteilten Lichts über eine der flächigen Seiten (11, 12) des Lichtleiters (10) aufweist, wobei bevorzugt die Lichtauskoppelbereiche durch Dichteunterschiede im Lichtleitermaterial gebildet sind.

9. Leuchte (1) nach einem der vorhergehenden Ansprüche, wobei die die Vertiefung (14) begrenzende Oberfläche (142), welche reflektierend ausgebildet ist, mit einer reflektierenden Schicht versehen ist und/oder Aluminium-bedampft ist.

10. Leuchte (1) nach einem der vorhergehenden Ansprüche, wobei eine der flächigen Seiten (11, 12) wenigstens zu der anderen flächigen Seite (12, 11) hin reflektierend ausgebildet ist, bevorzugt mit einer reflektierenden Beschichtung versehen ist, wobei die Leuchtmittel (2) zur Lichteinstrahlung in den Lichtleiter (10) zugeordnete Bereiche (16) freigelassen sind.

11. Leuchte (1) nach einem der vorhergehenden Ansprüche, wobei der Lichtleiter (10) als Lichtleitplatte mit flächiger Erstreckung im Wesentlichen in einer Ebene ist, oder eine räumliche Form aufweist, wobei bevorzugt bei der räumlichen Form des Lichtleiters (10) die die jeweilige Vertiefung (14) umgebenden Lichtleiterteilbereiche (15) rotationssymmetrisch ausgebildet sind und/oder eine Trichterform aufweisen.

12. Leuchte (1) nach einem der vorhergehenden Ansprüche, wobei die Leuchtmittel (2) auf einer Leiterplatte (20) angeordnete LEDs (21) aufweisen, wobei die Leiterplatte auf der dem Lichtleiter (10) zugewandten Seite (11) reflektierend ausgebildet ist, bevorzugt mittels reflektierender Beschichtung oder durch Abdeckung mit einer Reflektor- oder Diffusorfolie, wobei ferner bevorzugt die Reflektor- oder Diffusorfolie Öffnungen aufweist, in denen die Leuchtmittel (2) angeordnet oder durch welche die Leuchtmittel (2) hindurch auf den Lichtleiter (10) abstrahlen können.

13. Leuchte (1) nach einem der vorhergehenden Ansprüche, wobei die Leuchte (1) auf der den Leuchtmitteln (2) abgewandten flächigen Seite (12) ein flächiges Optikelement (3) aufweist, welches bevorzugt an dem Lichtleiter (10) anliegend oder von dem Lichtleiter (10) beabstandet vorgesehen ist.

14. Leuchte (1) nach Anspruch 13, wobei das flächige Optikelement (3) eine Diffusorfolie (30) aufweist, und wobei bevorzugt das flächige Optikelement (3) ferner mit zunehmendem Abstand zu dem Lichtleiter (10) eine mikroprismatische Optik (31) in Form einer Folie oder Platte, und/oder ferner bevorzugt ferner eine transparente Abdeckung (32) aufweist.

15. Leuchte (1) nach einem der vorhergehenden Ansprüche, ferner aufweisend ein Gehäuse (4), mit welchem der Lichtleiter (10), die Leuchtmittel (2) und bevorzugt das Optikelement (3), sofern vorhanden, in einem vordefinierten Abstand zueinander angeordnet sind.

## Claims

1. Lighting apparatus (1), having
a light guide (10) having two planar sides (11, 12) which are connected to one another via a circumferential end face (13), at least one of the planar sides (11, 12) having a plurality of recesses (14) which extend toward the other planar side (12, 11), each recess (14) having, when viewed in a lateral cross-sectional view of the light guide (10), two flanks (140, 141) which extend at least partly transversely to the region of the planar side (11, 12) having the recess (14) and toward one another in order to deflect light which is incident on one of the planar sides (11, 12) laterally in the direction of the extension direction of the light guide (10) or of the light guide part region (15) surrounding the recess (14) in order to distribute the deflected light over the entire surface in the light guide (10) or in the light guide part region (15) by means of total reflection;
and a plurality of lighting means (2), each lighting means (2) being associated with a recess (14) for deflecting light of the associated lighting means (2) which is incident on one of the planar sides (11, 12), the lighting means (2) being arranged on one of the planar sides (11, 12) and the recesses (14) being provided on at least the opposite planar side (12, 11),
**characterized in that**
at least the recesses (14) which are provided on the planar side (12) opposite the lighting means (2) have a surface (142) which delimits the recess (14) and is designed to be reflective, and the lighting apparatus (1) is a built-in lighting apparatus, an attachment lighting apparatus or a pendant lighting apparatus.

2. Lighting apparatus (1) according to claim 1, wherein the recesses (14) are pot-shaped, conical or funnel-shaped.

3. Lighting apparatus (1) according to either claim 1 or claim 2, wherein the recesses (14) have a rotationally symmetrical shape having a rotational symmetry axis (R), wherein the flanks (140, 141) extend at least partly transversely to the rotational symmetry axis (R).

4. Lighting apparatus (1) according to any of the preceding claims, wherein the two planar sides (11, 12) have a plurality of recesses (14).

5. Lighting apparatus (1) according to claim 4, wherein each recess (14) of at least a portion of the recesses (14) of the first planar side (11, 12) is opposite one of the recesses (14) of the second planar side (12, 11), wherein preferably these pairs of recesses (14) each have the same rotational symmetry axis (R).

6. Lighting apparatus (1) according to any of the preceding claims, wherein the light guide (10) further has light decoupling structures for decoupling the light distributed in the light guide (10) or the light guide part region (15) via one of the planar sides (11, 12) of the light guide (10).

7. Lighting apparatus (1) according to claim 6, wherein the light decoupling structures are formed on or in one of the planar sides (11, 12) which is preferably opposite the planar side (12, 11) used for decoupling.

8. Lighting apparatus (1) according to any of the preceding claims, wherein the light guide (10) further has light decoupling regions for decoupling the light distributed in the light guide (10) or in the light guide part region (15) via one of the planar sides (11, 12) of the light guide (10), wherein the light decoupling regions are preferably formed by density differences in the light guide material.

9. Lighting apparatus (1) according to any of the preceding claims, wherein the surface (142) which delimits the recess (14) and is designed to be reflective is provided with a reflective layer and/or is aluminum-plated.

10. Lighting apparatus (1) according to any of the preceding claims, wherein one of the planar sides (11, 12) is designed to be reflective at least to the other planar side (12, 11) and is preferably provided with a reflective coating, wherein the lighting means (2) are left free for light irradiation in regions (16) associated with the light guide (10).

11. Lighting apparatus (1) according to any of the preceding claims, wherein the light guide (10) is substantially in one plane as a light guide plate having a planar extension, or has a spatial shape, wherein, preferably in the spatial shape of the light guide (10), the light guide part regions (15) surrounding each recess (14) are rotationally symmetrical and/or have a funnel shape.

12. Lighting apparatus (1) according to any of the preceding claims, wherein the lighting means (2) have LEDs (21) arranged on a printed circuit board (20), wherein the printed circuit board is designed to be reflective on the side (11) facing the light guide (10), preferably by means of a reflective coating or by covering with a reflector or diffuser film, wherein the reflector or diffuser film preferably further has openings in which the lighting means (2) can be arranged or through which the lighting means (2) can radiate onto the light guide (10).

13. Lighting apparatus (1) according to any of the preceding claims, wherein the lighting apparatus (1) has a planar optical element (3) on the planar side (12) facing away from the lighting means (2), which optical element is preferably adjacent to the light guide (10) or spaced apart from the light guide (10).

14. Lighting apparatus (1) according to claim 13, wherein the planar optical element (3) has a diffuser film (30), and wherein the planar optical element (3) preferably further has a microprismatic optical system (31) in the form of a film or plate, and/or further preferably further has a transparent cover (32) at an increasing distance from the light guide (10).

15. Lighting apparatus (1) according to any of the preceding claims, further having a housing (4), with which the light guide (10), the lighting means (2) and preferably the optical element (3), if present, are arranged at a predefined distance from one another.

## Revendications

1. Luminaire (1), présentant
un guide de lumière (10), présentant deux faces planes (11, 12) reliées l'une à l'autre par l'intermédiaire d'une face frontale périphérique (13), au moins l'une des faces planes (11, 12) présentant une pluralité de creux (14) qui s'étendent en direction de l'autre face plane (12, 11), chaque creux (14) présentant, en vue en coupe transversale latérale du guide de lumière (10), deux flancs (140, 141) s'étendant au moins en partie transversalement par rapport à la zone présentant le creux (14) de la face plane (11, 12) et l'un vers l'autre, afin de dévier de la lumière projetée par l'intermédiaire de l'une des faces planes (11, 12) latéralement en direction de la direction d'extension du guide de lumière (10) ou de la zone partielle de guide de lumière (15) entourant le creux (14), afin de répartir la lumière déviée, à plat, dans le guide de lumière (10) ou dans la zone partielle de guide de lumière (15) au moyen d'une réflexion totale ;
ainsi qu'une pluralité de moyens d'éclairage (2), un creux (14) destiné à dévier de la lumière du moyen d'éclairage (2) associé projetée par l'intermédiaire de l'une des faces planes (11, 12) étant associé à chaque moyen d'éclairage (2), les moyens d'éclairage (2) étant disposés sur l'une des faces planes (11, 12) et les creux (14) étant prévus sur au moins la face plane (12, 11) opposée,
**caractérisé en ce que**
au moins les creux (14) prévus sur la face plane (12) opposée aux moyens d'éclairage (2) présentent une surface (142) limitant le creux (14), laquelle surface est réalisée de manière réfléchissante, et le luminaire (1) est un luminaire à encastrer, un luminaire apparent ou un luminaire suspendu.

2. Luminaire (1) selon la revendication 1, les creux (14) étant réalisés en forme de cuvette, en forme de cône ou en forme d'entonnoir.

3. Luminaire (1) selon la revendication 1 ou 2, les creux (14) présentant une forme symétrique en rotation comportant un axe de symétrie de rotation (R), les flancs (140, 141) s'étendant au moins en partie transversalement par rapport à l'axe de symétrie de rotation (R).

4. Luminaire (1) selon l'une des revendications précédentes, les deux faces planes (11, 12) présentant une pluralité de creux (14).

5. Luminaire (1) selon la revendication 4, chaque creux (14) d'au moins une partie des creux (14) de la première face plane (11, 12) étant respectivement opposé à l'un des creux (14) de la seconde face plane (12, 11), lesdites paires de creux (14) présentant de préférence respectivement le même axe de symétrie de rotation (R).

6. Luminaire (1) selon l'une des revendications précédentes, le guide de lumière (10) présentant en outre des structures de découplage de lumière destinées à découpler la lumière répartie dans le guide de lumière (10) ou dans la zone partielle de guide de lumière (15) par l'intermédiaire de l'une des faces planes (11, 12) du guide de lumière (10).

7. Luminaire (1) selon la revendication 6, les structures de découplage de lumière étant réalisées sur ou dans l'une des faces planes (11, 12), laquelle se situe de préférence à l'opposé de la face plane (12, 11) servant au découplage.

8. Luminaire (1) selon l'une des revendications précédentes, le guide de lumière (10) présentant en outre des zones de découplage de lumière destinées à découpler la lumière répartie dans le guide de lumière (10) ou dans la zone partielle de guide de lumière (15) par l'intermédiaire de l'une des faces planes (11, 12) du guide de lumière (10), les zones de découplage de lumière étant formées de préférence par des différences de densité dans le matériau de guide de lumière.

9. Luminaire (1) selon l'une des revendications précédentes, la surface (142) limitant le creux (14), laquelle est réalisée de manière réfléchissante, étant pourvue d'une couche réfléchissante et/ou étant métallisée à l'aluminium.

10. Luminaire (1) selon l'une des revendications précédentes, l'une des faces planes (11, 12) étant réalisée de manière réfléchissante au moins vers l'autre face plane (12, 11), de préférence étant pourvue d'un revêtement réfléchissant, les moyens d'éclairage (2) étant laissés libres pour l'émission de lumière dans les zones (16) associées au guide de lumière (10).

11. Luminaire (1) selon l'une des revendications précédentes, le guide de lumière (10), en tant que plaque de guidage de lumière comportant une extension plane, étant sensiblement situé dans un plan ou présentant une forme spatiale, de préférence, dans le cas de la forme spatiale du guide de lumière (10), les zones partielles de guide de lumière (15) entourant le creux (14) respectif étant réalisées de manière symétrique en rotation et/ou présentant une forme d'entonnoir.

12. Luminaire (1) selon l'une des revendications précédentes, les moyens d'éclairage (2) présentant des DEL (21) disposées sur une carte de circuits imprimés (20), la carte de circuit imprimés étant réalisée de manière réfléchissante sur la face (11) orientée vers le guide de lumière (10), de préférence au moyen d'un revêtement réfléchissant ou par recouvrement d'une feuille de réflecteur ou de diffuseur, la feuille de réflecteur ou de diffuseur présentant en outre de préférence des ouvertures, dans lesquelles les moyens d'éclairage (2) peuvent être disposés ou à travers lesquelles les moyens d'éclairage (2) peuvent émettre de la lumière sur le guide de lumière (10).

13. Luminaire (1) selon l'une des revendications précédentes, le luminaire (1) présentant un élément optique (3) plan sur la face plane (12) opposée aux moyens d'éclairage (2), lequel élément optique étant de préférence prévu de manière adjacente au guide de lumière (10) ou à une certaine distance du guide de lumière (10).

14. Luminaire (1) selon la revendication 13, l'élément optique (3) plan présentant une feuille de diffuseur (30) et l'élément optique (3) plan présentant de préférence en outre, avec une distance croissante par rapport au guide de lumière (10), une optique microprismatique (31) sous forme d'une feuille ou d'une plaque, et/ou en outre, de préférence, en outre, un composant de recouvrement transparent (32).

15. Luminaire (1) selon l'une des revendications précédentes, présentant en outre un boîtier (4) au moyen duquel le guide de lumière (10), les moyens d'éclairage (2) et de préférence l'élément optique (3), pour autant qu'il soit présent, sont disposés à une distance prédéfinie les uns des autres.
